# EUROPÄISCHE PATENTSCHRIFT

(11) **EP 2 175 144 B1**
(45) Veröffentlichungstag und Bekanntmachung des Hinweises auf die Patenterteilung: **04.01.2012**
(21) Anmeldenummer: 08017670.4
(22) Anmeldetag: 08.10.2008
(51) Int. Cl.: F16B 5/02

(54) **Bauteil mit einem plattenförmigen Bereich mit stirnseitigem Gewinde**
Component with a board-shaped area with thread on the front side
Composant doté d'une zone en forme de plaque pourvue d'un filetage frontal

(43) Veröffentlichungstag der Anmeldung: 14.04.2010
(73) Patentinhaber: TRUMPF Werkzeugmaschinen GmbH + Co. KG, 71254 Ditzingen (DE)
(72) Erfinder: Heusel, Jörg, 70435 Stuttgart (DE)
(74) Vertreter: Prüfer & Partner GbR European Patent Attorneys

(56) Entgegenhaltungen:
- WO-A-2008/001056
- DE-C- 624 404
- DE-C- 648 218
- DE-C- 810 545
- DE-C- 886 236
- DE-U1- 8 803 517
- US-A- 493 791
- US-A- 3 111 977
- US-A- 3 166 632

## Beschreibung

Die Erfindung betrifft ein Bauteil mit einem plattenförmigen Bereich, das ohne zusätzliche Bauteile ein stirnseitiges Gewinde aufweist.

Herkömmlicherweise werden plattenförmige Bauteile, die stirnseitig an andere Bauteile geschraubt werden, gelocht, abgekantet und mit einer Einpressmutter versehen. Dies erfordert jedoch einen Materialmehraufwand, was sich in zusätzlichen Kosten und zusätzlichem Gewicht bemerkbar macht, und zusätzliche Arbeitsgänge, die ebenfalls die Kosten erhöhen.

Um das Abkanten zu umgehen, werden, wie z.B. in der Patentschrift DE 199 51 742 C1 offenbart, zusätzliche Befestigungselemente in Aussparungen in dem plattenförmigen Bauteil eingebracht, die ein Gewinde aufweisen. Auch dies erhöht die Kosten, da zusätzliche Teile verwendet werden.

Eine weitere Alternative sind Ausklinkungen am Rand des plattenförmigen Bauteils, die zur Stirnseite hin offen sind. Die Kontur der Ausklinkung ist, wie in der Patentschrift US 4,116,510 gezeigt, rechteckig mit einer Breite, die ungefähr dem erforderlichen Kernlochdurchmesser für eine gewünschte Schraube entspricht.

Die Patentschrift DE 37 10 624 C1 zeigt eine Verbindung, bei der neben der Ausklinkung für die Schraube zwei weitere Ausklinkungen vorgesehen sind, so dass oberhalb und unterhalb der Ausklinkung für die Schraube zwei zungenartige Vorsprünge entstehen, die bis in das anzuschraubende Bauteil reichen. Durch das Eindrehen der Schraube werden die Vorsprünge zur Seite gedrückt und verspreizen sich in entsprechenden Öffnungen im anzuschraubenden Bauteil.

Diese Lösungen haben den Nachteil, dass nur geringe Biegemomente durch diese Verbindung aufgenommen werden können. Außerdem entsteht bei der Verwendung von Blechschrauben der weitere Nachteil, dass mehrmaliges Lösen und Anziehen nicht möglich ist, da die Verbindung dann nicht mehr sicher ist.

In der Offenlegungsschrift EP 0 162 637 A1 ist als Stand der Technik mit unbekannter Herkunft eine Verbindung beschrieben, bei der in das plattenförmige Bauteil drei Einschnitte parallel zur nächstliegenden Kante ausgeführt werden. Der Abschnitt zwischen der Kante und dem ersten Einschnitt wird in eine Richtung gebogen, und die Abschnitte zwischen den Einschnitten werden jeweils wechselseitig in die entgegengesetzten Richtungen gebogen. In den daraus entstehenden Kanal wird eine Schraube eingeschraubt. Eine alleinige Umformung des Materials zwischen den Einschnitten bedingt, dass nach der Umformung eine Gewinde für eine Schraube separat eingebracht werden muss, was wiederum mit einem zusätzlichen Arbeitsgang verbunden ist. Alternativ stellt die Schraube beim Eindrehen das Gewinde selbst her. Dabei ergibt sich aber eine Verbindung, die für größere Schraubenauszugskräfte nicht geeignet ist.

Das US-Patent US-A-493,791 offenbart ein Werkzeug, mit dem in ein Blech Streifen geschnitten werden kann und diese Streifen so gebogen werden können, dass in einer vertikalen Richtung alternativ auf- und abwärts gerichtete Bögen gebildet werden. Diese Bögen sind in einer Form gebildet, die entlang der Bögen rinnenförmig ist.

In dem US-Patent US-A-3 166 632 ist ein Gehäuse aus Blechplatten für eine elektrische Vorrichtung offenbart. Eine Seite des Gehäuses ist benachbart zu der Vorderkante mehrfach geschlitzt, um eine Mehrzahl von Bändern, die parallel zu der Vorderkante sind, zu erzeugen. Die mittleren Abschnitte der Bänder werden zu dem Inneren oder dem Äußeren des Gehäuses hin gebogen und so in Laschen geformt. Somit kann ein Gewindeabschnitt einer selbstfurchenden Schraube aufgenommen werden, oder die mittleren Abschnitte können mit einem Gewindeschneidwerkzeug mit einem Gewinde versehen werden.

Das Patent DE 886 236 C zeigt eine rechtwinklige Befestigung von dünnen metallischen Platten, beispielsweise von Abschirmblechen an der Gehäusewand bei elektrischen Geräten. Aus einer Plattenebene ist ein Steg in Form einer Öse herausgedrückt, die halbrund ausgebildet ist. Beiderseits des Stegs wird jeweils ein Bett für einen Schraubenbolzen eingedrückt. In die an dem Schraubenbolzen anliegenden Flächen werden Gewindegänge eingeprägt oder eingeschnitten. Das Herausdrücken des Stegs, das Eindrücken des Bettes und das Einprägen der Gewindegänge kann mit einem entsprechenden Werkzeug in einem Arbeitsgang erfolgen.

Es ist Aufgabe der Erfindung, ein Bauteil mit einem plattenförmigen Bereich, das ein stirnseitiges Gewinde aufweist, ohne die vorgenannten Nachteile zu beinhalten, ein Werkzeug und ein Verfahren zu der Herstellung des Gewindes zur Verfügung zu stellen.

Die Aufgabe wird mit den Merkmalen des Anspruchs 1 und einem Werkzeug gemäß Anspruch 5 gelöst. Weiterbildungen der Erfindung sind in den abhängigen Ansprüchen beschrieben.

Ein Bauteil mit einem plattenförmigen Bereich bietet durch darin eingebrachte Trennstellen und das Umformen von an die Trennstellen angrenzenden Abschnitten die Möglichkeit, stirnseitige Gewinde für große Auszugskräfte, d.h. für große Kräfte, die erforderlich sind, um die Schraube in Achsrichtung aus dem Gewinde herauszuziehen, ohne zusätzliche Bauteile auszubilden.

Die Erfindung wird anhand von verschiedenen Ausführungsbeispielen unter Bezugnahme auf die beigefügten Zeichnungen erklärt, wobei die Ausführungsbeispiele gemäß den Figuren 1 bis 6 und 8 die erfindungsgemäßen Merkmale nicht aufweisen.
- Fig. 1: zeigt eine perspektivische Ansicht eines Bauteils mit einem plattenförmigen Bereich mit einer Trenn- stelle senkrecht zur stirnseitigen Fläche;
- Fig. 2: zeigt eine perspektivische Ansicht eines weiteren Bauteils mit einem plattenförmigen Bereich mit ei- ner Trennstelle senkrecht zur stirnseitigen Fläche;
- Fig. 3: zeigt eine perspektivische Ansicht eines Bauteils mit einem plattenförmigen Bereich mit einer Trenn- stelle parallel zur stirnseitigen Fläche;
- Fig. 4: zeigt eine perspektivische Ansicht eines Bauteils mit einem plattenförmigen Bereich mit zwei Trenn- stellen parallel zur stirnseitigen Fläche;
- Fig. 5: zeigt eine perspektivische Ansicht eines Bauteils mit einem plattenförmigen Bereich mit zwei Trennstellen, die senkrecht zueinander stehen;
- Fig. 6: zeigt eine perspektivische Ansicht eines Bauteils mit einem plattenförmigen Bereich mit mehreren Trennstel- len, die senkrecht zueinander stehen;
- Fig. 7: zeigt eine perspektivische Ansicht eines Bauteils mit einem plattenförmigen Bereich mit mehreren parallelen Trennstellen, die nicht parallel zu der stirnseitigen Fläche sind;
- Fig. 7a: ist eine Darstellung eines Schnitts entlang der Mit- telachse senkrecht zu den Oberflächen des in Fig. 7 dargestellten Bauteils;
- Fig. 7b: zeigt die Darstellung der Fig. 7a einschließlich eines Gewindebolzens;
- Fig. 7c: ist eine seitliche Ansicht des in Fig. 7 gezeigten Bauteils senkrecht zur seitlichen Fläche;
- Fig. 7d: ist eine Draufsicht auf die stirnseitige Fläche des in Fig. 7 gezeigten Bauteils in Richtung der Mittelachse;
- Fig. 8: zeigt ein perspektivische Ansicht eines Bauteils mit einem plattenförmigen Bereich mit mehreren parallelen Trennstellen, die parallel zu der stirnseitigen Fläche sind;
- Fig. 8a: ist eine Darstellung eines Schnitts entlang der Mit- telachse senkrecht zu den Oberflächen des in Fig. 8 dargestellten Bauteils;
- Fig. 8b: zeigt die Darstellung der Fig. 8a einschließlich eines Gewindebolzens;
- Fig. 8c: ist eine seitliche Ansicht des in Fig. 8 gezeigten Bauteils senkrecht zur seitlichen Fläche;
- Fig. 8d: ist eine Draufsicht auf die stirnseitige Fläche des in Fig. 8 gezeigten Bauteils in Richtung der Mittelachse;
- Fig. 9a: zeigt das teilweise geschnitten dargestellte Oberteil eines Stanz-Biege-Werkzeugs zur Herstellung eines stirnseitigen Gewindes;
- Fig. 9b: zeigt eine Ansicht von unten auf die Schneid- und Bie- gekomponenten des in Fig. 9a gezeigten Oberteils;
- Fig. 9c: zeigt eine Schnittdarstellung der in Fig. 9b gezeigten Schneid- und Biegekomponenten entlang der Schnittlinie A-A;
- Fig. 10a: stellt einen seitlichen Schnitt durch das Unterteil eines Stanz-Biege-Werkzeugs zur Herstellung eines stirnseitigen Gewindes dar;
- Fig. 10b: zeigt eine Ansicht von oben auf das in Fig. 10a ge- zeigte Unterteil mit Schneid- und Biegekomponenten;
- Fig. 10c: zeigt eine Schnittdarstellung der in Fig. 10b ge- zeigten Schneid- und Biegekomponenten entlang der Schnittlinie B-B;

In den Figuren, die ähnliche Ausführungsformen zeigen, sind gleiche Merkmale mit den selben Bezugszeichen gekennzeichnet und nicht wiederholt beschrieben.

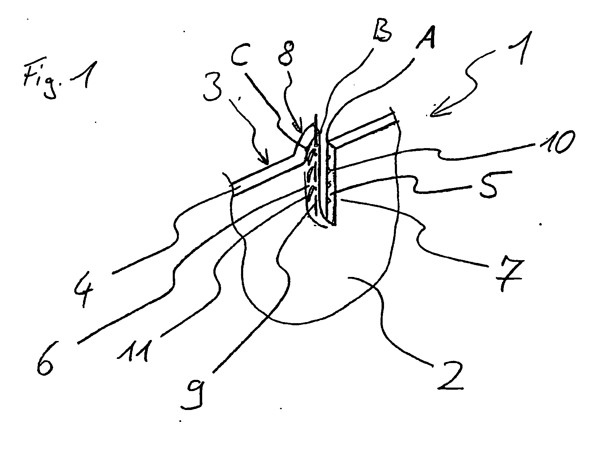

Fig. 1 zeigt eine perspektivische Ansicht eines plattenförmigen Bereichs 1 eines Bauteils mit einem stirnseitigen Gewinde, das die erfindungsgemäße Merkmalskombination nicht aufweist. Der plattenförmige Bereich wird durch gegenüberliegende Flächen 2, 3 und eine stirnseitige Fläche 4 gebildet. Die Fläche 2 begrenzt auf der Vorderseite und die Fläche 3 auf der nicht gezeigten Rückseite den plattenförmigen Bereich 1. In dem plattenförmigen Bereich 1 ist eine Trennstelle 5 eingebracht, die sich von der stirnseitigen Fläche 4 ausgehend senkrecht zu dieser in den plattenförmigen Bereich erstreckt. Die Trennstelle 5 unterbricht den plattenförmigen Bereich 1, so dass ein erster Abschnitt 6 und ein zweiter Abschnitt 7 entstehen, die jeweils an die Trennstelle 5 anschließen. Der erste Abschnitt 6 ist so umgeformt, dass eine seitliche Oberfläche 8, die sich in Fig. 1 auf der nicht gezeigten Rückseite befindet, aus der Fläche 3 herausragt.

Der Abschnitt 6 ist so umgeformt, dass ein gleichseitiges Dreieck mit Ecken A, B, C gebildet wird. Der Punkt A liegt an einer Ecke, die durch die rückseitige Fläche 3, die stirnseitige Fläche 4 und die Trennstelle 5 gebildet wird. Der Punkt B und der Punkt C liegen auf der oberen Kante des Abschnitts 6, die durch die stirnseitige Fläche 4 und die vordere Fläche des ersten Abschnitts 6 gebildet wird. Im Mittelpunkt dieses Dreiecks liegt in einer Richtung senkrecht zur stirnseitigen Fläche 4 eine Achse 9, die der Mittelachse eines Gewindes entspricht. Die Krümmung und der Biegewinkel zwischen dem ersten Abschnitt 6 und der unverformten Fläche 2, die die Umformung des ersten Abschnitts 6 definieren, sind so gewählt, dass die Kontur der vorderen Fläche des ersten Abschnitts 6 dem Umkreis des Dreiecks ABC entspricht, und der Durchmesser des Umkreises ist so gewählt, dass er als Kernlochdurchmesser für eine ausgewählte Schraube geeignet ist.

Die Achse 9 liegt bezogen auf die Dicke des plattenförmigen Bereichs außermittig. Bei größeren Schraubendurchmessern liegt sie neben dem plattenförmigen Bereich.

Die Abmessung (Länge) der Trennstelle 5, ausgehend von der stirnseitigen Fläche 4, ist abhängig von der Länge der zu verwendenden Schraube. Eine ausreichende Zugabe für die Länge der Trennstelle 5 zu der Länge der Schraube ist erforderlich, um ein vollständiges Einschrauben zu gewährleisten.

An einer Kante, die durch die rückseitige Fläche 3 und die Trennstelle 5 gebildet wird, und die sich vom Punkt A aus in Richtung der Achse 9 erstreckt, und an der der Achse 9 zugewandten Fläche des Abschnitts 6 sind später erklärte Einprägungen 10, 11 eingebracht.

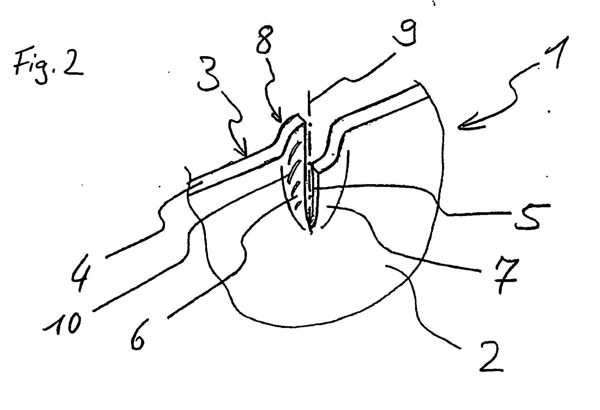

Fig. 2 zeigt eine perspektivische Ansicht eines weiteren Bauteils, das die erfindungsgemäße Merkmalskombination nicht aufweist, mit einem plattenförmigen Bereich 1 mit einer Trennstelle 5 senkrecht zur Stirnseite, wobei hier im Unterschied zu dem Bauteil in Fig. 1 nicht nur der erste Abschnitt 6, sondern auch der zweite Abschnitt 7 umgeformt ist.

Diese Ausführungsform ermöglicht es, dass die Achse 9 des Gewindes auch bei größeren Schraubendurchmessern innerhalb des plattenförmigen Bereichs liegt.

Die Winkel zwischen den verformten Abschnitten 6, 7 zu den Flächen 2, 3 und die Krümmungen, welche die Konturen der verformten Abschnitte 6, 7 ergeben, sind wiederum abhängig von dem für die Schraube erforderlichen Durchmesser. Auch hier ist der Durchmesser als der erforderliche Kernlochdurchmesser gewählt. Die Krümmungsmittelpunkte der Abschnitte 6, 7 liegen auf der Achse 9.

An den der Achse 9 zugewandten Flächen der Abschnitte 6 und 7 (bei Abschnitt 7 nicht gezeigt) sind später erklärte Einprägungen 10 eingebracht.

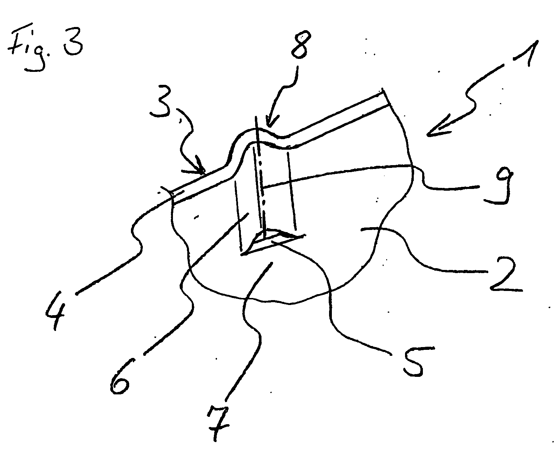

In Fig. 3 ist eine Ansicht eines Bauteils mit einem plattenförmigen Bereich 1 mit einer Trennstelle 5 parallel zur stirnseitigen Fläche 4 gezeigt. Somit fällt diese Ausführungsform nicht unter die beanspruchte Merkmalskombination. Der erste Abschnitt 6 liegt zwischen der Trennstelle 5 und der stirnseitigen Fläche 4. Der erste Abschnitt 6 ist beidseitig mit den unverformten Flächen 2, 3 des plattenförmigen Bereichs 1 verbunden und seine seitliche Oberfläche 8 ragt nach hinten aus der Fläche 3. Diese Umformung ergibt eine Brückenform des ersten Abschnitts 6.

Die Achse 9 liegt in dieser Ausführungsform, bezogen auf die Dicke des plattenförmigen Bereichs, außermittig, außerhalb des unverformten Bereichs des plattenförmigen Bereichs.

Die Kontur des umgeformten ersten Abschnitts 6 ist auch hier abhängig von dem für die Schraube erforderlichen Durchmesser. Die Kontur ist im Wesentlichen kreisförmig ausgebildet mit einem Durchmesser, der dem erforderlichen Kernlochdurchmesser entspricht, und der Abstand der vorderen Fläche des umgeformten ersten Abschnitts 6 zu der rückseitigen Fläche 3 entspricht ebenfalls dem Kernlochdurchmesser.

Mit dieser Ausführungsform können durch die Schraubenverbindung größere Querkräfte in Richtung des umgeformten ersten Abschnitts 6 als in den Ausführungsformen, die in Fig. 1 und 2 beschrieben sind, aufgenommen werden.

In alternativen Ausführungsformen zu der Ausführungsform in Fig. 3 sind eine Mehrzahl von Trennstellen 5 vorgesehen. Diese sind jeweils in der gleichen Größe ausgeführt und liegen parallel zu der ersten Trennstelle 5 in regelmäßigen Abständen zueinander mittig zu der Achse 9. Die Abschnitte zwischen den Trennstellen 5 sind wechselweise umgeformt und unverformt. Dadurch ergibt sich eine größere Schraubenauszugskraft und die Fähigkeit, in alle Richtungen Querkräfte aufnehmen zu können.

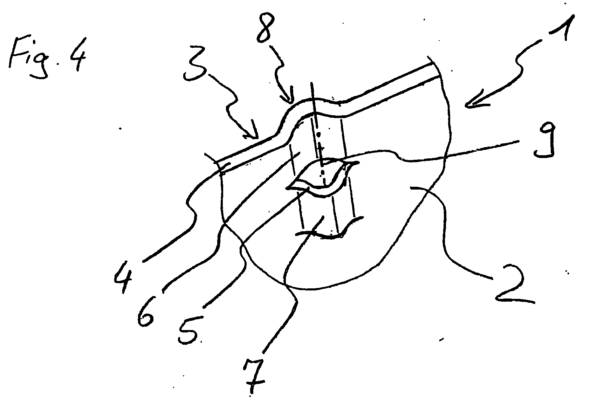

Fig. 4 zeigt eine perspektivische Ansicht eines Bauteils mit einem plattenförmigen Bereich mit zwei Trennstellen parallel zur Stirnseite, wobei diese Ausführungsform nicht unter die beanspruchte Merkmalskombination fällt.

Im Unterschied zu der Ausführungsform, die in Fig. 3 gezeigt ist, ist hier zusätzlich zu dem ersten Abschnitt 6 auch der zweite Abschnitt 7 umgeformt.

Die Eigenschaften entsprechen im wesentlichen der in Fig. 3 gezeigten Ausführungsform, die Achse 9 kann hier aber in Abhängigkeit von den Umformgraden der Abschnitte 6, 7, d.h. wie weit die Abschnitte jeweils nach außen umgeformt sind, innerhalb oder außerhalb des plattenförmigen Bereichs 1 liegen. Auch lässt sich, wie in Fig. 3, durch die Erhöhung der Anzahl der Trennstellen 5 und damit der dazwischen liegenden Abschnitte die Fähigkeit der Querkraftaufnahme verbessern und die Schraubenauszugskraft erhöhen. Die Abschnitte zwischen den Trennstellen 5 sind dann wechselseitig in Richtung der vorderen Fläche 2 und der hinteren Fläche 3 brückenförmig umgeformt.

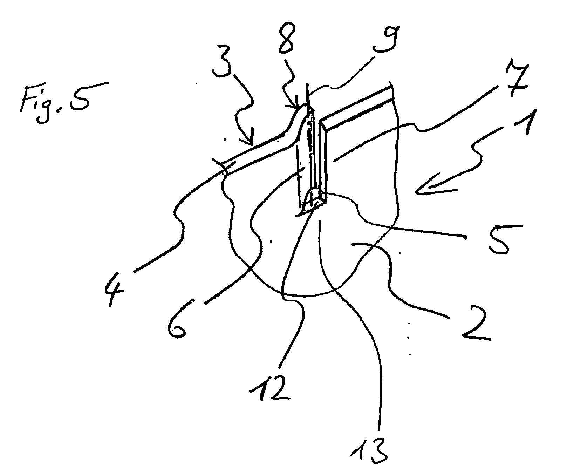

Fig. 5 stellt eine perspektivische Ansicht eines Bauteils, das die erfindungsgemäße Merkmalskombination nicht aufweist, mit zwei Trennstellen 5, die senkrecht zueinander stehen, dar. Die Trennstelle 5 erstreckt sich von der stirnseitigen Fläche 4 ausgehend senkrecht zu dieser in den plattenförmigen Bereich. Die Trennstelle 5 unterbricht den plattenförmigen Bereich 1, so dass ein erster Abschnitt 6 und ein zweiter Abschnitt 7 entstehen, die sich an die Trennstelle 5 anschließen. Eine zweite Trennstelle 12, die am Ende der ersten Trennstelle 5, das der stirnseitigen Fläche 4 gegenüberliegt, angeordnet ist, trennt den ersten Abschnitt 6 von einem dritten Abschnitt 13 ab. Der zweite Abschnitt 7 und der dritte Abschnitt 13 sind nicht umgeformt. Der erste Abschnitt 6 ist so umgeformt, dass eine seitliche Oberfläche 8, die sich auf der nicht gezeigten Rückseite befindet, aus der Fläche 3 herausragt.

Die Eigenschaften entsprechen im Wesentlichen denen der Ausführungsform, die in Fig. 1 gezeigt ist. Durch die zweite Trennstelle 12 ist aber eine gleichmäßige Umformung des Abschnitts 6 entlang der Achse 9 bis zur zweiten Trennstelle 12 möglich. Dadurch kann im Vergleich zu der Ausführungsform, die in Fig. 1 beschrieben ist, bei der gleichen Abmessung (Länge) der Trennstelle 5 in Richtung der Achse 9 eine größere Gewindelänge, insbesondere für Schrauben mit metrischem Gewinde, vorgesehen werden.

In einer alternativen Ausführungsform erstreckt sich die Länge der zweiten Trennstelle 12 auch über den zweiten Abschnitt 7, so dass die zweite Trennstelle 12 mittig zur ersten Trennstelle 5 liegt, und zusätzlich ist auch der zweite Abschnitt 7 in die gleiche Richtung, wie der erste Abschnitt 6 umgeformt. Dadurch kann in einer Modifizierung der Ausführungsform, die in Fig. 3 dargestellt ist, der Abstand der Achse 9 von der rückseitigen Fläche 3 vergrößert werden, also können Gewinde für Schrauben mit einem größeren Durchmesser vorgesehen werden, da eine übermäßige Streckung des Materials durch eine große Umformung vermieden wird.

In einer weiteren Ausführungsform ist im Gegensatz zu der gerade beschriebenen Ausführungsform der zweite Abschnitt 7 in Richtung der vorderen Fläche 2 umgeformt. Dadurch ergibt sich analog zu der in Fig. 5 gezeigten Ausführungsform die Möglichkeit, die Gewindelänge bei gleicher Länge der Trennstelle zu erhöhen. Die sonstigen Eigenschaften entsprechen denen der Ausführungsform, die in Fig. 2 gezeigt ist.

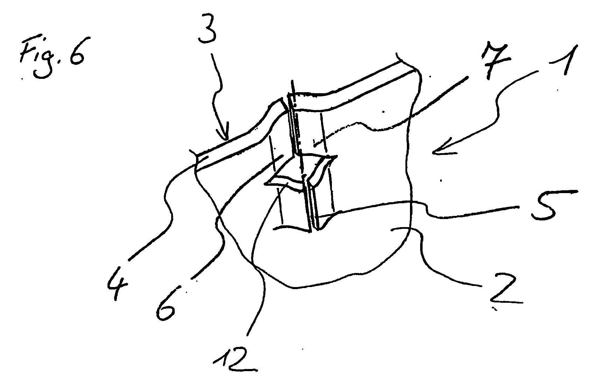

In Fig. 6 ist eine perspektivische Ansicht eines Bauteils, das die erfindungsgemäße Merkmalskombination nicht aufweist, mit einem plattenförmigen Bereich mit mehreren Trennstellen, die senkrecht zueinander stehen, dargestellt. Die Trennstelle 5 trennt den plattenförmigen Bereich 1 in zwei an die Trennstelle 5 anschließende Abschnitte. Diese Abschnitte werden durch mehrfach vorhandene Trennstellen 12, die im rechten Winkel zur Trennstelle 5 angeordnet sind, in weitere Abschnitte unterteilt. Die Abschnitte, die sich im gleichen Abstand zu der stirnseitigen Fläche 4 befinden, sind jeweils in die gleiche Richtung umgeformt. Die Abschnitte, die sich in Richtung der Achse 9 durch die zweiten Trennstellen 12 voneinander getrennt sind, sind jeweils wechselweise in die entgegengesetzten Richtungen umgeformt.

Diese Ausführungsform ermöglicht es, die Achse 9 des Gewindes auch bei größeren Schraubendurchmessern in den plattenförmigen Bereichs zu legen.

Die Winkel zwischen den verformten Abschnitten 6, 7, und die Krümmungen, die die Konturen der verformten Abschnitte 6, 7, sowie der Abschnitte, die sich durch die Trennung der zweiten Trennstellen 12, ergeben, sind wiederum abhängig von dem für die Schraube erforderlichen Durchmesser. Auch hier ist der Durchmesser als der erforderliche Kernlochdurchmesser gewählt. Die Krümmungsmittelpunkte der Abschnitte 6, 7 liegen auf der Achse 9.

Durch die Umformung des Abschnitts 6 und des Abschnitts 7 in die entgegengesetzten Richtungen, und die Umformung der in Richtung der Achse 9 liegenden folgenden Abschnitte in jeweils alternierenden Richtungen ergibt sich bei einer Mehrzahl von zweiten Trennstellen 12 ein Gewinde in einer verschränkten Ausführung der Abschnitte, das eine große Schraubenauszugskraft und Querkraftaufnahmefähigkeit, auch bei der Verwendung von Schrauben mit größerem Durchmesser aufweist, da eine übermäßige Streckung des Materials durch eine große Umformung vermieden wird.

In den der Achse 9 zugewandten Flächen der Abschnitte oder Kanten, die durch die Trennstelle 5 und der vorderen oder rückseitigen Fläche des plattenförmigen Bereichs gebildet werden, sind in weiteren Ausführungsformen, basierend auf den Ausführungsformen der Fig. 3 bis 6, Einprägungen 10, wie in Fig. 1 und Fig. 2 dargestellt, vorgesehen, die geeignete Teile von Gewindegängen bilden. Hierdurch wird das Einschrauben erleichtert und die Schraubenauszugskraft erhöht. Bei der Verwendung von selbstfurchenden oder selbstschneidenden Schrauben werden die erforderlichen Gewindegänge beim ersten Einschrauben erzeugt. Die in Fig. 1 und 2 gezeigten Ausführungsformen können auch ohne Einprägungen ausgeführt sein.

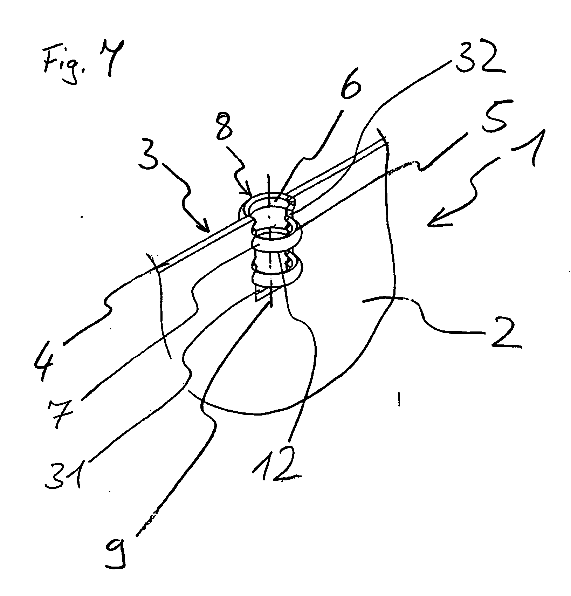

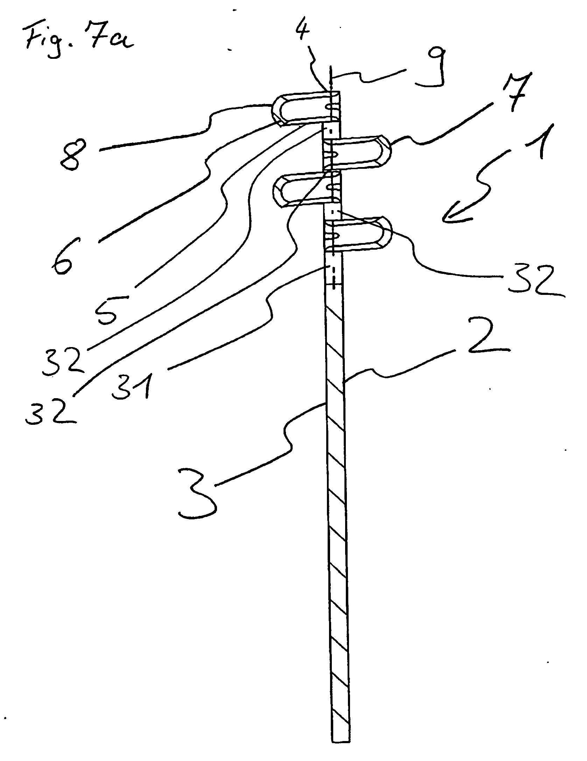

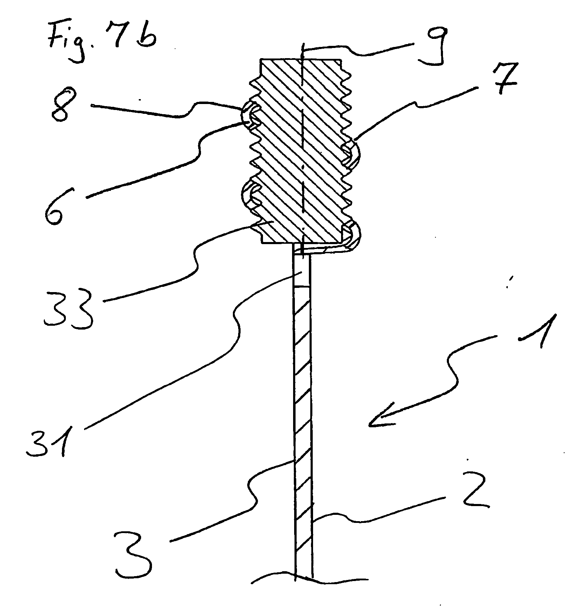

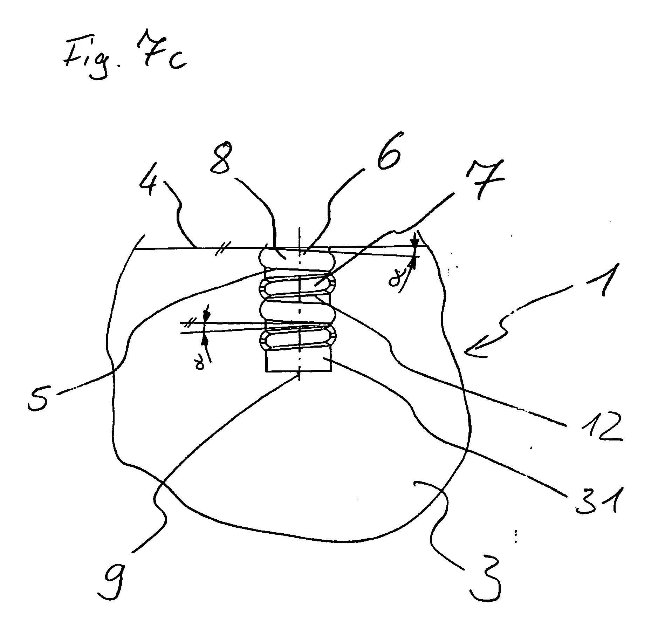

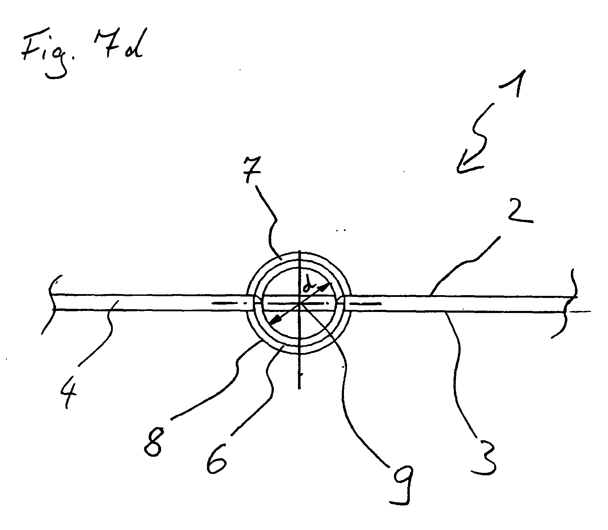

Die Fig. 7 zeigt eine perspektivische Ansicht eines erfindungsgemäßen Bauteils mit einem plattenförmigen Bereich mit mehreren zueinander parallelen

Trennstellen, die aber nicht parallel zu der stirnseitigen Fläche 4 sind. Der grundsätzliche Aufbau entspricht der in Fig. 4 gezeigten Ausführungsform, die Abschnitte 6 und 7 sind jedoch nicht nur in eine Richtung gekrümmt. Des weiteren weist der plattenförmige Abschnitt eine Aussparung 31 auf. Diese dient dazu, die Verwendung von längeren Schrauben zu erlauben.

Im Gegensatz zu den vorgenannten Ausführungsformen, bei denen die Ausrichtung der Trennstellen 5 parallel zur stirnseitigen Fläche ist, und die jeweils die Unterkante und die Oberkante der benachbarten Abschnitte bilden, ist in dieser Ausführungsform jeweils zwischen zwei Trennstellen, die die Unter- und Oberkante der Abschnitte 6 und 7 bilden, eine Freisparung 32 eingebracht, so dass zwischen den Abschnitten 6, 7 eine Lücke entsteht.

In der Fig. 7a ist eine Darstellung eines Schnitts entlang der Mittelachse 9 senkrecht zu den Oberflächen 2, 3 des in Fig. 7 dargestellten Bauteils 1 gezeigt.

Der Abschnitt 6 und der Abschnitt 7 sind wechselseitig nach der Vorderseite oder rückseitig herausragend umgeformt. Die seitliche Oberfläche 8 ist aber nicht, wie in den Ausführungsformen in den Fig. 1 bis 6 in Richtung der Achse 9 gerade, sondern weist in Richtung der Achse 9 eine Krümmung auf, die bezogen auf die Achse 9 eine konkave Form aufweist, so dass die jeweiligen oberen und unteren Enden der Abschnitte 6, 7 in Richtung der Achse 9 gekrümmt sind. Die umgeformten Abschnitte der Bauteile in den Fig. 1 bis 6 können in weiteren Ausführungsformen auch analog zu dem Bauteil in der Fig. 7 konkav gekrümmte Abschnitte aufweisen.

In alternativen Ausführungsformen der Bauteile gemäß den Fig. 1 bis 7 weisen nur die oberen und unteren Enden, oder jeweils nur ein oberes oder ein unteres Ende eine Krümmung in Richtung der Achse 9 auf.

In der Fig. 7b ist die Darstellung der Ausführungsform entsprechend der Fig. 7a einschließlich eines Gewindebolzens 33 mit metrischem Gewinde gezeigt. Hierbei ist ersichtlich, dass der Abstand der Abschnitte 6, 7 und der Krümmungsradius der Abschnitte 6, 7 auf die Abmessung des Gewindes des Gewindebolzens 33 abgestimmt ist.

In der Fig. 7c ist eine seitliche Ansicht des in Fig. 7 gezeigten Bauteils senkrecht zur seitlichen Fläche dargestellt. Die Trennstellen 5, 12 sind nicht parallel zu der stirnseitigen Fläche 4, sondern schließen dazu einen bestimmten Winkel ein. Der Winkel wird durch ein für den jeweiligen Gewindetyp und die jeweilige Gewindegröße bestimmten Steigungswinkel α, der z.B. für ein metrisches M6-Gewinde 3° beträgt, bestimmt. Für die gängigen Gewindegrößen und -typen liegt er in einem Bereich von 1,5° bis 3,5°.

Fig. 7d zeigt schließlich eine Draufsicht auf die stirnseitige Fläche des in Fig. 7 gezeigten Bauteils in Richtung der Mittelachse 9. Die umgeformten Abschnitte ergeben in der Projektion in Richtung der Achse 9 eine umlaufende Form, so dass ein Gewindebolzen vollständig umschlossen wird. Der innere Umfang der umgeformten Abschnitte 6, 7 bildet eine kreisförmige Projektion mit einem Durchmesser d. Der Durchmesser entspricht dem für das entsprechende Gewinde erforderlichen Kernlochdurchmesser, für ein metrisches M6-Gewinde beträgt der Nenndurchmesser z.B. 5 mm.

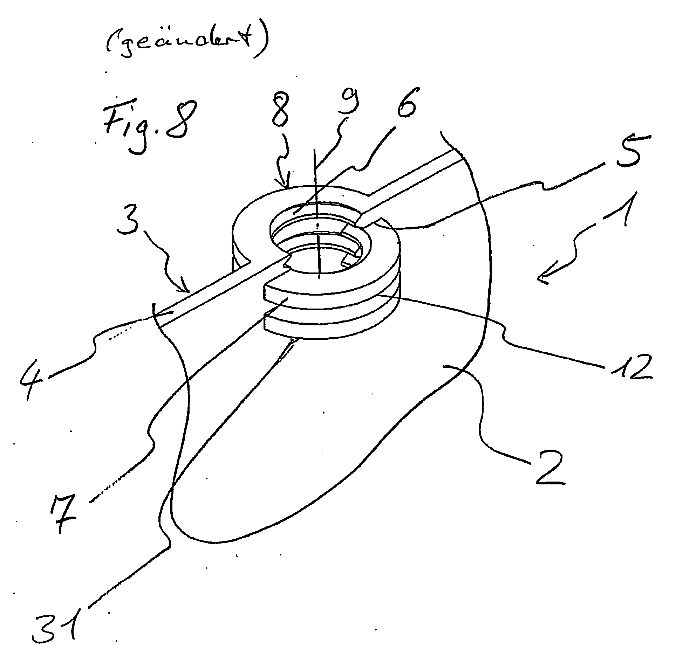

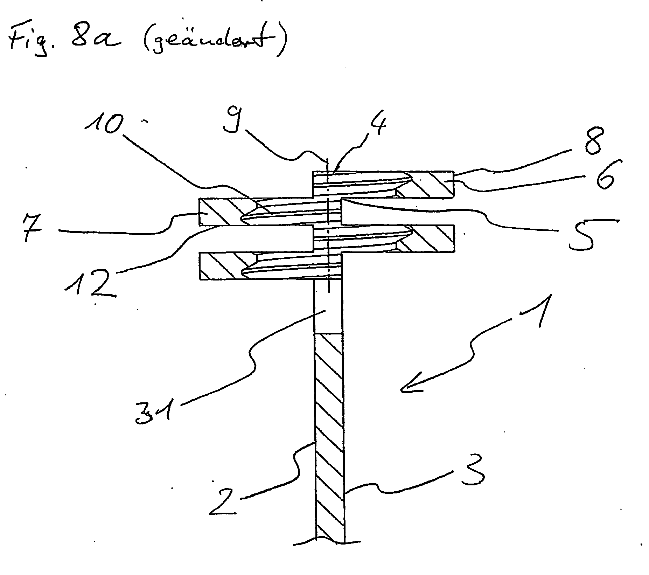

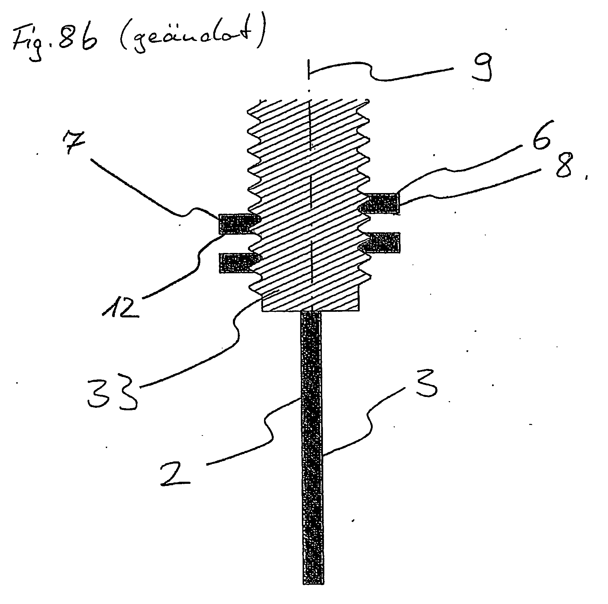

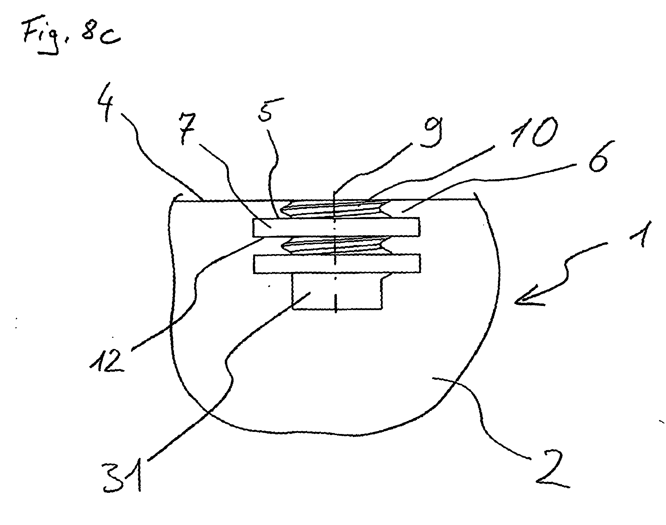

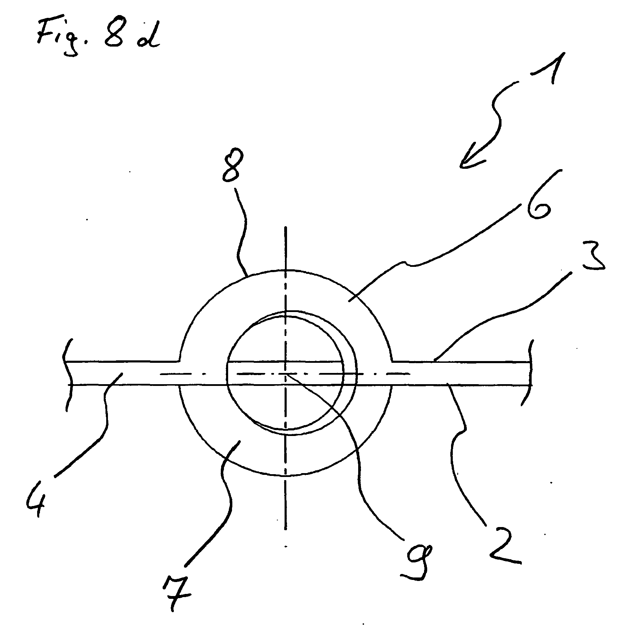

In Fig. 8 ist eine perspektivische Ansicht eines Bauteils einer weiteren Ausführungsform mit einem plattenförmigen Bereich mit mehreren parallelen Trennstellen, die parallel zu der stirnseitigen Fläche sind dargestellt.

Fig. 8a ist eine Darstellung eines Schnitts entlang der Mittelachse senkrecht zu den Flächen 2, 3 des in Fig. 8 dargestellten Bauteils. Die Abschnitte 6, 7 sind in dieser Ausführungsform ohne Zwischenraum direkt aneinander wechselseitig auf die beiden Seiten umgeformt. Die äußere Umfangsfläche 8 bildet zu der Trennstelle 5 einen rechten Winkel. Auf der Innenseite der Abschnitte 6, 7 sind jeweils Abschnitte eines Innengewindes eingeprägt. Hier entspricht das eingeprägte Innengewinde dem für das verwendeten Bolzengewinde erforderliche Innengewinde. Die Aussparung 31 erlaubt auch in Abhängigkeit von ihrer Abmessung in Richtung der Achse 9 die Verwendung von Schrauben, deren Länge größer als die eingeprägte Gewindelänge ist.

Das Zusammenwirken des Gewindes, das in das Bauteil der Ausführungsform gemäß der Fig. 8 eingeprägt ist, mit einem Bolzengewinde ist in Fig. 8b gezeigt. Hier ist der Gewindebolzen 33 so weit eingeschraubt, dass er die Aussparung 31 vollständig ausfüllt.

Die Fig. 8c ist eine seitliche Ansicht des in Fig. 8 gezeigten plattenförmigen Bereichs 1 des Bauteils senkrecht zur seitlichen Fläche 2 und die Fig. 8d ist eine Draufsicht auf die stirnseitige Fläche des in Fig. 8 gezeigten Bauteils in Richtung der Mittelachse 9. Hier ist zu sehen, dass das Innengewinde in der Projektion in Richtung der Achse 9 umlaufend gestaltet ist, so dass ein Bolzengewinde fast vollständig umfasst wird.

Das fast vollständige, wechselseitige Umfassen des Bolzengewindes ermöglicht eine Übertragung von großen Auszugskräften und großen Seitenkräften durch die Schraubverbindung.

Die in den Fig. 8 bis 8d gezeigte Ausführungsform ermöglicht eine ideale Umformung des Materials, ohne dass das Material verquetscht wird. Das Material legt sich um die erhabenen Formen und erhält dadurch seine Form nur durch Umformen.

In weiteren Ausführungsformen sind Variationen der gezeigten Ausführungsformen möglich.

Die Achse 9, die die Gewindeachse darstellt, liegt in den gezeigten Ausführungsformen im rechten Winkel zur stirnseitigen Fläche 4 angeordnet. Eine Lage dieser Achse in einem anderen Winkel zur stirnseitigen Fläche 4 ist ebenfalls möglich, fällt aber nicht unter die beanspruchte Merkmalskombination.

Die Trennstelle 5 liegt in den gezeigten Ausführungsformen parallel oder im rechten Winkel, was aber nicht unter die beanspruchte Merkmalskombination fällt, oder erfindungsgemäß entsprechend dem Steigungswinkel α zur stirnseitigen Fläche 4, und die zweite Trennstelle 12 im rechten Winkel zur Trennstelle 5. Unabhängig von dem Winkel, den die Achse 9 mit der stirnseitigen Fläche einschließt, kann die Trennstelle 5 mit der stirnseitigen Fläche 4 auch einen anderen, geeigneten Winkel einschließen und auch die zweite Trennstelle 12 mit der Trennstelle 5 ebenfalls einen anderen geeigneten Winkel einschließen, der nicht einem rechten Winkel entspricht.

Der plattenförmige Bereich 1 des Bauteils ist in den vorgenannten Ausführungsbeispielen als Blech ausgeführt. In alternativen Ausführungsformen ist auch ein anderes Material, wie Kunststoff, der gegebenenfalls verstärkt ist, einsetzbar.

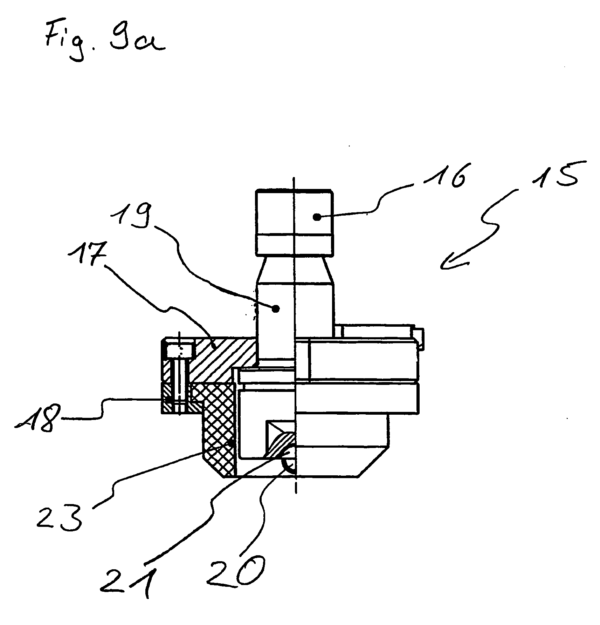

Fig. 9a zeigt ein im Halbschnitt dargestelltes Oberteil 15 eines Stanz-Biege-Werkzeugs das prinzipiell zur Herstellung eines stirnseitigen Gewindes in den in den Fig. 7 bis 7d und Fig. 8 bis 8d gezeigten Ausführungsform geeignet ist.

Bei der Beschreibung wird davon ausgegangen, dass der plattenförmige Bereich 1 mit der Fläche 2 nach oben, in Richtung des Stempels, und mit der Seite 3 nach unten, in Richtung der Matrize, eingelegt wird.

Das Oberteil 15 weist einen Stempel 19 mit einem Stempelschaft 16 auf, mit dem das Oberteil 15 formschlüssig und spielfrei in eine obere Werkzeugaufnahme einer Stanzmaschine aufgenommen wird. Der Stempelschaft 16 ist mit einem Justierring 17 verbunden. An dem Justierring ist wiederum ein Haltering 18 befestigt, der einen Niederhalter 23 trägt. Am unteren Ende weist der Stempel einen ersten Vorsprung 20 und eine erste Vertiefung 21 auf.

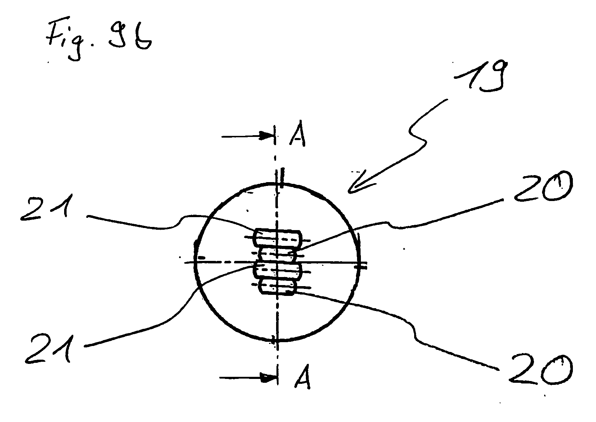

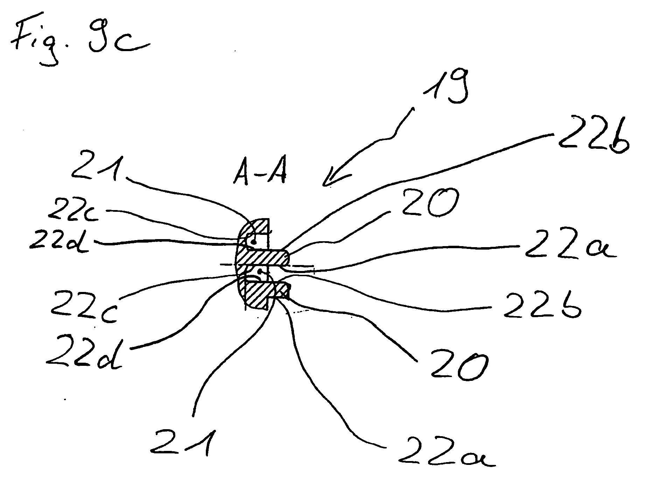

In Fig. 9b, in der eine Ansicht von unten auf den in Fig. 9a gezeigten Stempels 19 dargestellt ist, und in Fig. 9c, in der eine Schnittdarstellung der in Fig. 9b gezeigten ersten Vorsprünge 20 und ersten Vertiefungen 21 entlang der Schnittlinie A-A gezeigt ist, ist ersichtlich, dass der Stempel 19 abwechselnd die ersten Vorsprünge 20 und die ersten Vertiefungen 21 aufweist. Die ersten Vorsprünge 20 sind an ihrem oberen Ende kuppelförmig. Der in Fig. 9c gezeigte Radius der in dieser Darstellung unteren Kuppel bildet den Krümmungsradius der konkaven Form des in Fig. 7a gezeigten Abschnitts 6. Die ersten Vorsprünge 20 weisen seitlich jeweils eine Seitenfläche 22a, 22b auf. Die Seitenflächen 22a, 22b sind eben und parallel.

Wie in Fig. 9a zu sehen, weist die Kuppel des ersten Vorsprungs 20 in dieser Ansicht ebenfalls eine Krümmung auf, deren Abmessung den Kernlochdurchmesser des Gewindes beeinflusst. Die Abmessungen der Kuppel werden in Abhängigkeit von dem Schraubendurchmesser, der Gewindeart, der Blechdicke und dem Material empirisch ermittelt.

Die ersten Vertiefungen 21 neben den ersten Vorsprüngen 20 sind so geformt, dass sie die Umformung des zweiten Abschnitts 7 und eines weiteren Abschnitts auf die selbe Seite des plattenförmigen Bereichs 1 bewirken. Durch die Form der Vertiefungen 21 wird die Kontur der vorderseitig herausragenden Oberfläche des zweiten Abschnitts 7 gebildet. Die ersten Vertiefungen 21 weisen, wie in Fig. 9c gezeigt, Seitenflächen 22c, 22d, auf. Die Seitenflächen 22c, 22d liegen in der selben Ebene wie die angrenzenden Seitenflächen 22a, 22b der Vorsprünge 20.

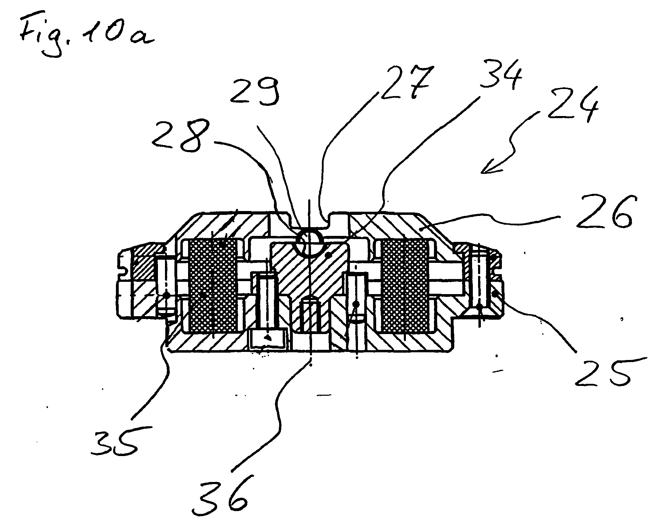

Fig. 10a zeigt eine seitliche Ansicht eines Schnitts durch das Unterteil des Stanz-Biege-Werkzeugs, einer Matrize 24, zur Herstellung eines stirnseitigen Gewindes. Die Matrize 24 weist einen Haltering 25 auf, mit dem die Matrize 24 in einer unteren Werkzeugaufnahme einer Stanzmaschine aufgenommen wird. In der Matrize 24 ist ein Auswerfer 26 angeordnet. Der Auswerfer 26 ist mit einer Freifahrnut 27 ausgestattet, die es erlaubt, den plattenförmigen Bereich 1 nach dem Erzeugen des Gewindes, obwohl dann der Abschnitt 6 nach unten aus dem plattenförmigen Teil ragt, aus der Matrize 24 seitlich wegzubewegen. Der Auswerfer 26 ist in Richtung einer Achse 36 verschiebbar mit einer oberen und einer unteren Endstellung gelagert. Durch den Einsatz von federnden Elementen 35 wird er in seine obere Endstellung gedrängt. Während des Stanzvorgangs wird der Auswerfer 26 nach unten gedrückt und kehrt danach wieder in seine obere Endposition zurück, und bewegt somit den plattenförmigen Bereich 1 nach einem Erzeugen des Gewindes wieder nach oben. Im Zentrum der Matrize 24 ist ein Einsatz 34 mit zweiten Vertiefungen 28 und zweiten Vorsprüngen 29 angeordnet.

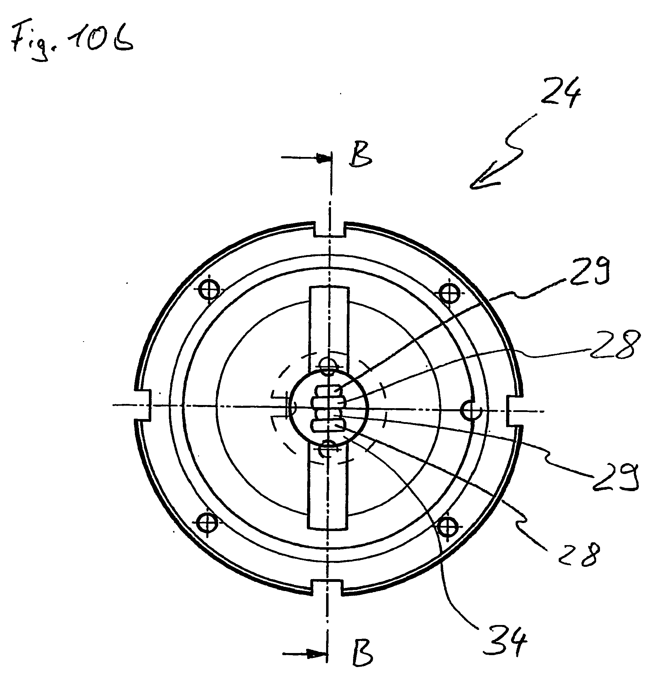

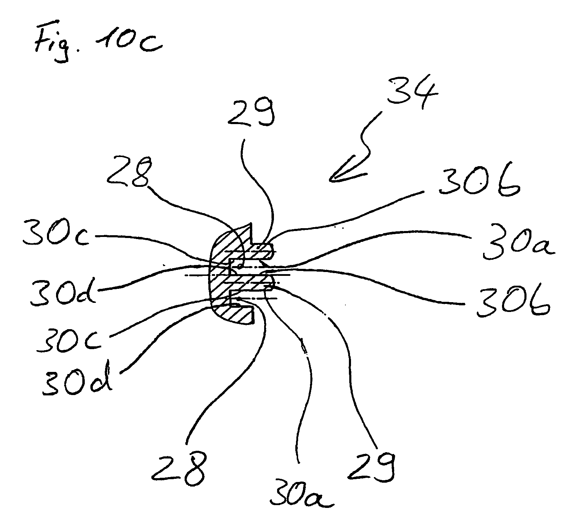

In Fig. 10b, in der eine Draufsicht auf die Matrize 24 mit den in Fig. 10a gezeigten zweiten Vertiefungen 28 und zweiten Vorsprüngen 29 dargestellt ist, und in Fig. 10c, in der eine Schnittdarstellung der in Fig. 10b gezeigten Schneid- und Biegekomponenten entlang der Schnittlinie B-B gezeigt ist, ist ersichtlich, dass auch der Einsatz 34 abwechselnd die zweiten Vorsprünge 29 und die zweiten Vertiefungen 28 aufweist.

Die zweiten Vertiefungen 28 in dem Einsatz 34 bilden analog zu den ersten Vertiefungen 21 im Stempel 19 die Kontur der rückseitig herausragenden Abschnitte. Die in Fig. 10b und Fig. 10c jeweils unten dargestellte zweite Vertiefung 28 formt die Oberfläche des ersten Abschnitts 6. Die zweiten Vertiefungen 28 weisen die gleiche Kontur, wie die ersten Vertiefungen 21 im Stempel 19 auf. Die zweiten Vertiefungen 28 weisen auf den sich zugewandten Seiten jeweils eine Seitenfläche 30c, 30d auf.

Die zweiten Vorsprünge 29 sind an ihrem oberen Ende kuppelförmig. Der in Fig. 10c gezeigte Radius des in dieser Darstellung unteren Vorsprungs 29 bildet den Krümmungsradius der konkaven Form des in Fig. 7a gezeigten Abschnitts 7. Die Vorsprünge 29 weisen seitlich jeweils eine Seitenfläche 30a, 30b auf. Die Seitenflächen 30a, 30b sind eben und parallel.

Die Vorsprünge 20, 29 bilden mit den Vertiefungen 21, 28 die Biegekomponenten des Werkzeugs.

Die Vorsprünge 29 weisen auf den sich zugewandten Seiten jeweils eine Seitenfläche 30a, 30b auf. Die Seitenflächen 30a, 30b der Vorsprünge 29 und die Seitenflächen 30c, 30d der Vertiefungen 28 sind parallel und liegen jeweils in einer Ebene.

Die Seitenflächen der ersten Vorsprünge 20 und der zweiten Vorsprünge 29 bilden die Schneidkomponenten des Werkzeugs. Der Abstand der jeweils an den beiden Seiten der Vertiefungen 28 angeordneten zueinander gewandten Seitenflächen 30c, 30d, also die Weite der Vertiefungen 28, ist ca. 0,4 mm größer als der Abstand der von einander abgewandten Seitenflächen 22a, 22b beidseitig der Vorsprünge 20, also der Breiten der Vorsprünge, um einen Schnittspalt zu erzeugen. Der Abstand der von sich abgewandten Seitenflächen 30a, 30b der Vorsprünge 29, also die Breite der Vorsprünge 29, ist jeweils ca. 0,4 mm kleiner als der jeweilige Abstand der sich zugewandten Seitenflächen 22c, 22d der Vertiefungen 21, also der Weite der Vertiefung 21, um ebenfalls einen Schneidspalt zu erzeugen. Die Biegekomponenten sind somit zwischen den Schneidkomponenten angeordnet.

Ein Verfahren zur Herstellung von stirnseitigen Gewinden in plattenförmigen Bereichen 1 von Bauteilen weist sechs Verfahrensschritte auf. Hierbei wird das Gewinde in der Ausführungsform, wie in Fig. 7 bis Fig. 7d gezeigt erzeugt.

Im Schritt 1 wird der plattenförmige Bereich 1 des Bauteil mit der Fläche 2 nach oben in Richtung des Stempels 19 durch die Stanzmaschine so positioniert, dass die in Fig. 9c gezeigte untere Seitenfläche 22a des unteren Vorsprungs 20 des Stempels 19 in einer Ebene mit der stirnseitigen Fläche 4 liegt.

Anschließend wird im Schritt 2 das Werkzeugoberteil 15 durch die Stanzmaschine so weit herab gefahren, dass der Niederhalter 23 das Blech nach unten drückt, so dass der Auswerfer 26 ebenfalls nach unten gedrückt wird, bis die ersten Vorsprünge 20 des Stempels 19 und die zweiten Vorsprünge 29 der Matrize 24 die Ober- und Unterseite des plattenförmigen Bereichs 1 berühren.

Im nächsten Schritt 3 wird das Werkzeugoberteil 15 weiter nach unten gefahren und das Blech an den Seitenflächen 22a, 22b der ersten Vorsprünge 20 und den Seitenflächen 30a, 30b der zweiten Vorsprünge 29 geschnitten. Dabei entstehen die Trennstellen oberhalb und unterhalb des zweiten Abschnitts 7 und die Trennstelle unterhalb des Abschnitts, der sich unterhalb des Abschnitts 7 anschließt.

Im Schritt 4 wird das Werkzeugoberteil 15 weiter nach unten bewegt und die in Fig. 7 gezeigte unterste Trennstelle wird erzeugt.

Im Schritt 5 werden durch eine weitere Abwärtsbewegung die Abschnitte in ihrer endgültigen gekrümmten Form gebildet.

Im 6. Schritt fährt das Werkzeugoberteil wieder nach oben in die Grundposition, wobei der Niederhalter ein Nachobenziehen des Bauteils verhindert und der Auswerfer der plattenförmigen Abschnitt 1 aus der Matrize drückt.

Im Schritt 7 wird das Bauteil durch die Stanzmaschine so aus dem Werkzeug gefahren, dass die nach unten umgeformten Abschnitte durch die Freifahrnut aus der Matrize 24 bewegt werden.

Die Schritte 2 bis 5 erfolgen bei einer einzigen Hubbewegung des Werkzeugoberteils.

## Patentansprüche

1. Bauteil mit zumindest einem plattenförmigen Bereich (1), der aus zwei gegenüberliegenden Flächen (2, 3) und einer stirnseitigen Fläche (4) gebildet wird, wobei der plattenförmige Bereich (1) eine Trennstelle (5) mit einem ersten und einem zweiten daran anschließenden Abschnitt (6, 7) aufweist, und zumindest einer der Abschnitte (6, 7) so umgeformt ist, dass eine seitliche Oberfläche dieses Abschnitts (6, 7) aus der Fläche (3) des plattenförmigen Bereichs (1) herausragt, und sich zwischen dem umgeformten ersten Abschnitt (6) und dem zweiten Abschnitt (7) in einer Projektion in Richtung einer Achse (9) parallel zu den Flächen (2, 3) eine Öffnung zum Einbringen einer Schraube ergibt, und mindestens ein Ende in Richtung der Achse (9) mindestens eines Abschnitts (6, 7) zu der Achse (9) hin gekrümmt ist, und sich die Achse (9) senkrecht zu der stirnseitigen Fläche (4) erstreckt, **dadurch gekennzeichnet, dass**
die Trennstelle (5) eine gerade Form aufweist und einen Winkel mit der stirnseitigen Fläche (4) einschließt, der dem Steigungswinkel eines zu erzeugenden Gewindes entspricht.

2. Bauteil gemäß Anspruch 1, **dadurch gekennzeichnet, dass** die Abschnitte (6, 7) brückenförmig ausgeführt sind.

3. Bauteil gemäß Anspruch 1 oder 2, **dadurch gekennzeichnet, dass** der plattenförmige Bereich eine zweite Trennstelle (12) senkrecht zur Trennstelle (5) aufweist.

4. Bauteil gemäß einem der vorangehenden Ansprüche, **dadurch gekennzeichnet, dass** der plattenförmige Bereich (1) des Bauteils aus Blech hergestellt ist.

5. Werkzeug zum Anfertigen eines Bauteils gemäß einem der vorangehenden Ansprüche, **dadurch gekennzeichnet, dass** das Werkzeug entsprechende Schneid- und Biegekomponenten aufweist.

6. Werkzeug gemäß Anspruch 5, **dadurch gekennzeichnet, dass** die Biegekomponenten jeweils zwischen den Schneidkomponenten angeordnet sind.

7. Werkzeug gemäß einem der Ansprüche 5 oder 6, **dadurch gekennzeichnet, dass** das Werkzeug eine Freifahrnut (27) aufweist.

## Claims

1. Component with at least one plate-shaped area (1) formed by two opposite surfaces (2, 3) and by a surface on the face (4), wherein the plate-shaped area (1) comprises a disconnect (5) with a first and a second portion (6, 7) adjoining thereto, and at least one of the portions (6, 7) is remodelled such that a lateral surface of this portion (6, 7) protrudes out of the surface (3) of the plate-shaped area (1), and an orifice for inserting a screw arises between the remodelled first portion (6) and the second portion (7) in a projection in a direction of an axis (9) which is parallel to the faces (2, 3), and at least one end of at least one portion (6, 7) in the direction of the axis (9) is curved towards the axis (9), and the axis (9) extends perpendicular to the surface on the face (4),
**characterized in that**
the disconnect (5) has a straight shape and the disconnect (5) and the surface on the face (4) include an angle corresponding to a lead angle of a thread to be formed.

2. Component according to claim 1, **characterized in that** the portions (6, 7) are formed bridge-like.

3. Component according to claim 1 or 2, **characterized in that** the plate-shaped area comprises a second disconnect (12) which is perpendicular to the disconnect (5).

4. Component according to any of the preceding claims, **characterized in that** the plate-shaped area (1) of the component is made of sheet metal.

5. Tool for manufacturing a component according to any of the preceding claims, **characterized in that**, the tool comprises corresponding cutting elements and bending elements.

6. Tool according to claim 5, **characterized in that** the bending elements are respectively arranged between the cutting elements.

7. Tool according to claim 5 or 6, **characterized in that** the tool comprises a free run groove (27).

## Revendications

1. Composant doté d'au moins une zone (1) en forme de plaque, formée de deux faces (2, 3) en regard et d'une face (4) frontale, la zone (1) en forme de plaque présentant un emplacement de séparation (5) avec un premier et un deuxième tronçon (6, 7), s'y raccordant, et au moins l'un des tronçons (6, 7) étant déformé de manière qu'une surface latérale de ce tronçon (6, 7) ressorte de la face (3) de la zone (1) en forme de plaque, et qu'une ouverture, pour introduire une vis, soit créée, entre le premier tronçon (6) déformé et le deuxième tronçon (7), dans une projection en direction d'un axe (9) parallèlement aux faces (2, 3), et au moins une extrémités est incurvée par rapport à l'axe (9), en direction de l'axe (9) au moins d'un tronçon (6, 7), et l'axe (9) s'étend perpendiculairement à la face (4) frontale, **caractérisé en ce que**
l'emplacement de séparation (5) présente une forme rectiligne et fait avec la face (4) frontale un angle correspondant à l'angle de pas d'un filetage à produire.

2. Composant selon la revendication 1, **caractérisé en ce que** les tronçons (6, 7) sont réalisés en forme de pont.

3. Composant selon la revendication 1 ou 2, **caractérisé en ce que** la zone en forme de plaque présente un deuxième emplacement de séparation (12), perpendiculaire à l'emplacement de séparation (5).

4. Composant selon l'une des revendications précédentes, **caractérisé en ce que** la zone (1) en forme de plaque du composant est fabriquée en tôle.

5. Outil de fabrication d'un composant selon l'une des revendications précédentes, **caractérisé en ce que** l'outil présente des composants de découpage et de pliage correspondants.

6. Outil selon la revendication 5, **caractérisé en ce que** les composants de pliage sont chacun disposés entre les composants de découpage.

7. Outil selon l'une des revendications 5 ou 6, **caractérisé en ce que** l'outil présente une rainure de passage libre (27).
